# EUROPEAN PATENT APPLICATION

(11) **EP 4 826 439 A1**
(43) Date of publication of application: **21.10.2026**
(21) Application number: 26172287.0
(22) Date of filing: 14.04.2026
(51) Int. Cl.: G02C 11/00, H04R 1/08

(54) **DESIGNS FOR ENCAPSULATING SENSOR COMPONENTS WITH OPENINGS FOR OPERATION AND METHODS OF MANUFACTURE THEREOF**

(30) Priority: 15.04.2025 US 202563789321 P; 31.03.2026 US 202619635333
(71) Applicant: Meta Platforms Technologies, LLC, Menlo Park, CA 94025 (US)
(72) Inventor: HOWARD, Zachary Ian, Menlo Park, 94025 (US); ALINI, Loic Plaisant, Menlo Park, 94025 (US); CAMARA, Scott, Menlo Park, 94025 (US); LEE, Jae, Menlo Park, 94025 (US); LY, Henry, Menlo Park, 94025 (US); PATEL, Jiger, Menlo Park, 94025 (US); PORTER, Simon, Menlo Park, 94025 (US); ROSTAMIASRABADI, Aria, Menlo Park, 94025 (US); STROUD, David Edwin, Menlo Park, 94025 (US); WANG, Zirui, Menlo Park, 94025 (US)
(74) Representative: Murgitroyd & Company

(57) **Abstract**

A wearable device including one or more sensors and one or more through-holes extending from an exterior portion of the first material to an interior portion of the first material where the one or more sensors are embedded is described. The wearable device includes a first material. The wearable device further includes a shield material, the shield material having a heat tolerance greater than a heat tolerance of the first material. The wearable device further includes one or more sensors positioned beneath the shield material and embedded within an overmolded portion of the first material. The wearable device further includes a through-hole, extending from an exterior portion of the first material to an interior portion of the first material where the one or more sensors are embedded, wherein the one or more sensors detect data via the through-hole.

## Description

### RELATED APPLICATION

This application claims priority to U.S. Provisional Application Serial No. 63/789,321, filed April 15, 2025, entitled "Designs For Encapsulating Sensor Components With Openings For Operation And Methods Of Manufacture Thereof".

### TECHNICAL FIELD

This relates generally to designs for and methods for embedding sensors, the sensors requiring openings for operation, within wearable devices.

### BACKGROUND

As wearable devices become more popular, the aesthetic design of wearable devices becomes more important, but the technological functionalities (e.g., integration of sensors, integration of output devices, thermal control, etc.) of the wearable devices must be maintained. For example, in conventional microphone integration methods, the product enclosure features machined and/or molded microphone holes that align with the microphone port on the microelectromechanical (MEMS) microphone component. The microphone is typically mounted onto a printed circuit board (PCB) and attached to the enclosure using a pressure-sensitive adhesive (PSA) or sealed to the microphone hole using a rubber boot. This creates an air seal between the environment and the MEMS microphone component, allowing it to convert air pressure and/or sound waves into electrical signals. However, this standard approach often involves a two-piece enclosure design, which can introduce visible parting lines that compromise industrial design aesthetics, particularly in wearable device applications where sleek designs are critical, such as smart glasses.

The limitations of conventional microphone integration methods pose significant challenges for product/industrial designers and manufacturers, particularly in applications where sleek designs, compact form factors, and high-quality audio performance are critical (e.g., smart glasses frames). Traditional two-piece enclosure designs can negatively impact product appeal (e.g., to consumers, hollowness feels cheap), product size (e.g., minimum wall thicknesses to protect the sensors from damage), user experience, and, therefore, market competitiveness.

As such, there is a need to address one or more of the above-identified challenges. A brief summary of solutions to the issues noted above are described below.

### SUMMARY

The present invention provides a wearable device, a smart glasses and a system as defined in the appended claims.

In accordance with a first aspect, there is provided a wearable device comprising:
a first material;
a shield material, the shield material having a heat tolerance greater than a heat tolerance of the first material;
one or more sensors positioned beneath the shield material and embedded within an overmolded portion of the first material; and
a through-hole, extending from an exterior portion of the first material to an interior portion of the first material where the one or more sensors are embedded, wherein the one or more sensors detect data via the through-hole.

The one or more sensors may comprise one or more microphones;

The wearable device may further comprise:
one or more second microphones positioned beneath the shield material and embedded within the overmolded portion of the first material; and
another through-hole, extending from the exterior portion of the first material to another interior portion of the first material where the one or more second microphones are embedded, wherein the one or more second microphones detect data via the other through-hole; and
while the wearable device is worn by a user, the one or more microphones and the one or more second microphones are in a line with a mouth of the user.

The first material may comprise a first-shot portion and the overmolded portion, and the one or more sensors and the shield material are coupled to the first-shot portion.

The wearable device may further comprise a mesh positioned between the one or more sensors and the exterior portion of the first material.

The wearable device may further comprise a shim positioned between the shield material and the overmolded portion of the first material.

The shim may comprise a silicone material.

The through-hole may extend through the shim.

While the wearable device is worn by a user, the through-hole may point toward a portion of a face of the user.

The shield material may comprise a stainless steel material.

The through-hole may extend through the shield material.

The wearable device may further comprise a flexible circuit positioned beneath the shield material and coupled to the one or more sensors.

The first material may comprise a plastic polymer material.

The wearable device may further comprise:
a second shield material, the second shield material having a second heat tolerance greater than the heat tolerance of the first material;
one or more second sensors positioned beneath the second shield material and embedded within the overmolded portion of the first material; and
a second through-hole, extending from the exterior portion of the first material to a second interior portion of the first material where the one or more second sensors are embedded, wherein the one or more second sensors detect second data via the second through-hole.

The one or more sensors may comprise at least one of one or more microphones, one or more light sensors, one or more temperature sensors, and one or more pressure sensors.

The wearable device may be a pair of smart glasses.

The through-hole may have a diameter between 1.0 mm and 1.5 mm.

In accordance with a second aspect, there is provided a smart glasses comprising:
a first material;
a shield material, the shield material having a heat tolerance greater than a heat tolerance of the first material;
one or more sensors positioned beneath the shield material and embedded within an overmolded portion of the first material; and
a through-hole, extending from an exterior portion of the first material to an interior portion of the first material where the one or more sensors are embedded, wherein the one or more sensors detect data via the through-hole.

The one or more sensors may comprise one or more microphones;

The smart glasses may further comprise:
one or more second microphones positioned beneath the shield material and embedded within the overmolded portion of the first material; and
another through-hole, extending from the exterior portion of the first material to another interior portion of the first material where the one or more second microphones are embedded, wherein the one or more second microphones detect data via the other through-hole; and
while the smart glasses are worn by a user, the one or more microphones and the one or more second microphones may be in a line with a mouth of the user.

In accordance with a third aspect, there is provided a system comprising:
one or more sensors;
a circuit, electrically coupled to the one or more sensors; and
a wearable device comprising:
   a first material;
   a shield material, the shield material having a heat tolerance greater than a heat tolerance of the first material, wherein the one or more sensors are positioned beneath the shield material and embedded within an overmolded portion of the first material; and
   a through-hole, extending from an exterior portion of the first material to an interior portion of the first material where the one or more sensors are embedded, wherein the one or more sensors detect data via the through-hole.

The system one or more sensors may comprise one or more microphones;
The system may further comprise one or more second microphones, wherein the one or more second microphones are positioned beneath the shield material and embedded within the overmolded portion of the first material; and
the wearable device may further comprise another through-hole, extending from the exterior portion of the first material to another interior portion of the first material where the one or more second microphones are embedded, wherein the one or more second microphones detect data via the other through-hole; and
while the wearable device is worn by a user, the one or more microphones and the one or more second microphones are in a line with a mouth of the user.

An example of a wearable device is described herein. This example wearable device includes a first material (e.g., a frame of the wearable device made of a polymer material). The wearable device further includes a shield material (e.g., made of a metal material), the shield material having a heat tolerance greater than a heat tolerance of the first material (e.g., the shield material has a greater heat tolerance than a molding temperature of the polymer material). The wearable device further includes one or more sensors (e.g., one or more microphones, one or more cameras, one or more light sensors, one or more temperature sensors, one or more pressure sensors, etc.) positioned beneath the shield material and embedded within an overmolded portion of the first material. The wearable device further includes a through-hole, extending from an exterior portion of the first material to an interior portion (e.g., an interior cavity of the wearable device) of the first material where the one or more sensors are embedded (e.g., the one or more sensors are embedded in the interior cavity), wherein the one or more sensors detect data (e.g., sound waves, images, light, temperature, air pressure, etc.) via the through-hole.

An example of a method for manufacturing a wearable device (e.g., the wearable device described above) is now described. The method includes, coupling one or more sensors (e.g., one or more microphones, one or more cameras, one or more light sensors, one or more temperature sensors, one or more pressure sensors, etc.) to a device base (e.g., a first shot of a polymer material) of the wearable device. The method further includes coupling a shield (e.g., made of a metal material) to the device base such that the shield covers the one or more sensors, wherein an opening of the shield is aligned with the one or more sensors. The method further includes coupling a shim (e.g., made of a silicone material and/or another elastomeric material) to the shield, wherein an opening of the shim is aligned with the opening of the shield and the one or more sensors. The method further includes removably coupling a pin to the shim. The method further includes overmolding a polymer material (e.g., a same and/or a different polymer material as the device base) over the device base of the wearable device to create a device cover (e.g., a second shot of a polymer material). The method further includes decoupling the pin from the shim, such that the pin leaves an opening (e.g., a through-hole) in the device cover that is aligned with the opening of the shim, the opening of the shield, and the one or more sensors.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1B illustrate an example head-wearable device including a sensor opening, in accordance with some embodiments.
Figures 2A-2B illustrate cross-section views of an encapsulation design for embedding one or more sensors inside a head-wearable device, in accordance with some embodiments.
Figures 3A-3E illustrate an example method for encapsulating the one or more sensors inside the head-wearable device, in accordance with some embodiments.
Figure 4A illustrates a plurality of shapes of a through-hole, in accordance with some embodiments.
Figure 4B illustrates a shape of the shield of the head-wearable device, in accordance with some embodiments.
Figure 5 illustrates a flow diagram of a method for manufacturing a wearable device, in accordance with some embodiments.
Figures 6A, 6B, 6C-1, and 6C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semitransparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors (used interchangeably with neuromuscular-signal sensors); (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Design And Method Of Protecting And Encapsulating Sensor Components

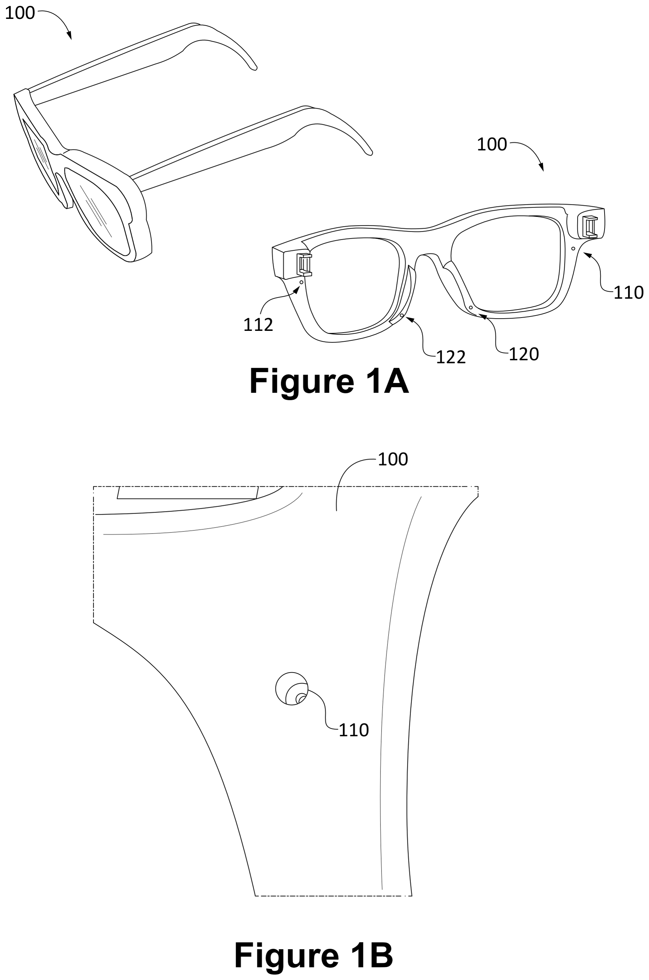

Figures 1A-1B illustrate an example head-wearable device 100 including a sensor opening 110, in accordance with some embodiments. While the primary device discussed herein is the head-wearable device 100, the same design and method for creating sensor openings may be applied to any electronic device including, but not limited to, other wearable devices (e.g., smart watches), body-integrated devices (e.g., smart implants), handheld devices (e.g., smartphones), computing devices (e.g., laptop computers), and/or peripheral devices (e.g., microphone devices). While the primary sensor discussed herein is a microphone, the same design and method for creating sensor openings may be applied to creating openings for any use including, but not limited to, other sensor uses (e.g., cameras, light sensors, temperature sensors, pressure sensors, etc.), thermal exchange (e.g., thermal vents), output device uses (e.g., speakers, lights, displays, etc.), and/or aesthetic design. In some embodiments, the head-wearable device 100 is a pair of smart glasses, as illustrated in Figure 1A. In some embodiments, the sensor opening 110 is an opening of a cover portion of the head-wearable device 100 that allows data (e.g., sound waves, light, air pressure, etc.) to enter an interior portion of the head-wearable device 100. One or more sensors (e.g., cameras, light sensors, temperature sensors, pressure sensors, etc.) are located within the interior portion, and the one or more sensors detect the data via the sensor opening 100. In some embodiments, the head-wearable device 100 further includes a second sensor opening 112 that is located on a opposite side of the head-wearable device 100 as the sensor opening 110. One or more second sensors are located within the interior portion, and the one or more second sensors detect second data via the second sensor opening 112. In some embodiments, the sensor opening 110 (and/or the second sensor opening 112) is located at a face portion of the head-wearable device 100. The face portion is a portion of the head-wearable device 100 that faces a face of a user while the head-wearable device 100 is worn by the user. In some embodiments, the sensor opening 110 (and/or the second sensor opening 112) is located at an armpit portion (and/or a second armpit portion) of the head-wearable device 100 (e.g., a portion of a frame of the head-wearable device 100 just below where a temple arm (and/or a second temple arm) of the head-wearable device 100 attaches to the frame).

As further described herein, the one or more sensors inside the sensor opening 110 includes a microphone configured to capture audio from the user of the head-wearable device 100. In some embodiments, the head-wearable device 100 further includes a nose-pad microphone located at the face portion of the head-wearable device 100 and/or at a nose-pad portion of the head-wearable device 100 (e.g., a portion of the frame of the head-wearable device 100 where the frame contacts a nose of the user while the head-wearable device 100 is worn by the user). In some embodiments, the nose-pad microphone is located at the interior portion of the head-wearable device 100 and detects further audio data via a nose-pad sensor opening 120. In some embodiments, the microphone (and/or the sensor opening 110) and the nose-pad microphone (and/or the nose-pad sensor opening 120) are positioned on the face portion of the head-wearable device 100 such that the microphone, the nose-pad microphone, and a mouth of the user form a straight line while the head-wearable device 100 is worn by the user. Positioning the microphone, the nose-pad microphone, and the mouth of the user along the straight line allows the microphone and the nose-pad microphone to act as a spaced pair of microphones. In some embodiments, the head-wearable device 100 further includes a second nose-pad microphone located at a second nose-pad portion of the head-wearable device 100 and/or located in the interior portion of the head-wearable device 100 and detects second audio data via a second nose-pad sensor opening 122. A second microphone (e.g., the one or more sensors inside the second sensor opening 112) (and/or the second sensor opening 112) and the second nose-pad microphone (and/or the second nose-pad sensor opening 122) are positioned on the face portion of the head-wearable device 100 such that the second microphone, the second nose-pad microphone, and the mouth of the user form a second straight line while the head-wearable device 100 is worn by the user, and the second microphone and the second nose-pad microphone act as a second spaced pair of microphones.

Figure 1B illustrates a close-up view of the sensor opening 110 at the armpit portion of the frame of the head-wearable device 100, in accordance with some embodiments. The sensor opening 110 is between 0.1 millimeters and 3.0 millimeters in diameter (e.g., 1.0 millimeters, 1.5 millimeters, 2.0 millimeters, etc.).

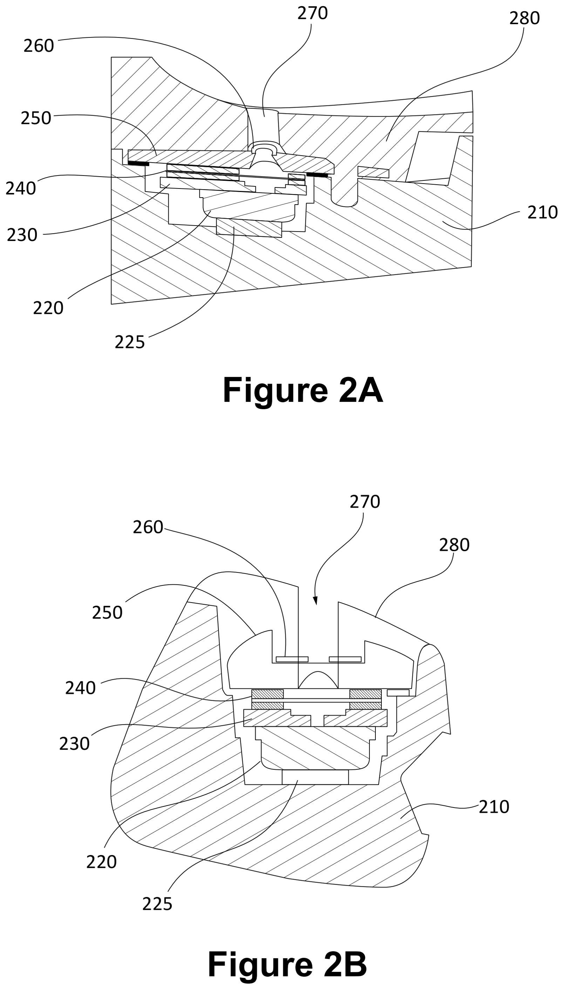

Figures 2A-2B illustrate cross-section views of an encapsulation design for embedding one or more sensors 220 inside the head-wearable device 100, in accordance with some embodiments. The frame of the head-wearable device 100 is formed by an overmolding process using a polymer material (e.g., an elastomer material, a plastic material, and/or a silicone material). The overmolding process includes a first shot of the polymer material which creates a base portion 210 of the frame and a second shot of the polymer material that creates a cover portion 280 of the frame. In some embodiments, the base portion 210 of the frame is made of a first polymer material and the cover portion 280 of the frame is made of a second polymer material that is different from the first polymer material. The cover portion 280 is formed such that a through-hole 270 (e.g., a channel) extends from an exterior side of the cover portion 280 to an interior cavity of the head-wearable device 100 between the base portion 210 and the cover portion 280, as illustrated in Figures 2A-2B. An exterior end of the through-hole 270 is the sensor opening 110, and the data (e.g., sound waves) passes through the through-hole 270 to be detected at the one or more sensors 220 (e.g., one or more microphone components).

The one or more sensors 220 is embedded within the frame, as illustrated in Figures 2A-2B. In some embodiments, the one or more sensors are coupled to the base portion 210 by a sensor mount 225 (e.g., a foam mounting material). While Figures 2A-2B illustrate the sensor mount 225 positioned at a side of the one or more sensors 220 opposite of the through-hole 270, the sensor mount 225 may be positioned and/or configured any way relative to the one or more sensor 220 such that the sensor mount 225 does not block the through-hole 270. In some embodiments, the one or more sensors 220 are electrically coupled to a circuit 230 (e.g., a flexible printed circuit) that receives digital data from the one or more sensors 220 and/or provides power to the one or more sensors 220. The circuit 230 is also coupled to the base portion 210, and/or electrically coupled to one or more other electronic components of the head-wearable device 100. In some embodiments, the circuit 230 is positioned between the one or more sensors 220 and the cover portion 280 (e.g., as illustrated in Figures 2A-2B), and the circuit 230 includes a circuit opening that further forms the through-hole 270 and allows the data to pass through the through-hole 270, as illustrated in Figures 2A-2B. In some embodiments, the circuit 230 is positioned such that the circuit opening is not required to form the through-hole 270 (e.g., at a side of the one or more sensors 220 opposite of the through-hole 270). In some embodiments, a sensor mesh 240 (e.g., a microphone mesh) is coupled to the circuit 230, the one or more sensors 220 and/or the base portion 210, and the microphone mesh 240 is between the one or more sensors 220 and the cover portion 280 (e.g., as illustrated in Figures 2A-2B). The sensor mesh 240 is configured to prevent particles (e.g., water, dust, sand, etc.) from contacting the one or more sensors 220 (e.g., damaging the one or more sensors 230 and/or distorting the data) via the through-hole 270, while still permitting the data to reach the one or more sensors 220.

The encapsulation design further includes a shield 250 (e.g., a stiffener and/or an anchor) that is coupled to the base portion 280. In some embodiments, the shield 250 is further coupled to the sensor mesh 240, the circuit 230, and/or the one or more sensors 220. The shield 250 is positioned between the one or more sensors 220 and the cover portion 280 (e.g., as illustrated in Figures 2A-2B), and the shield 250 includes a shield opening that further forms the through-hole 270 and allows the data to pass through the through-hole 270, as illustrated in Figures 2A-2B. In some embodiments, the shield 250 is configured such that an interior cavity is formed between the base portion 210 and the shield 250, and the one or more sensors 220, the sensor mount 225, the circuit 230, and/or the sensor mesh 240 are embedded within the interior cavity, as illustrated in Figures 2A-2B. The encapsulation design further includes a shim 260 coupled to the shield 250 and/or the base portion 210. The shim 260 is positioned between shield 250 and the cover portion 280 (e.g., as illustrated in Figures 2A-2B), and the shim 260 includes a shim opening that further forms the through-hole 270 and allows the data to pass through the through-hole 270, as illustrated in Figures 2A-2B.

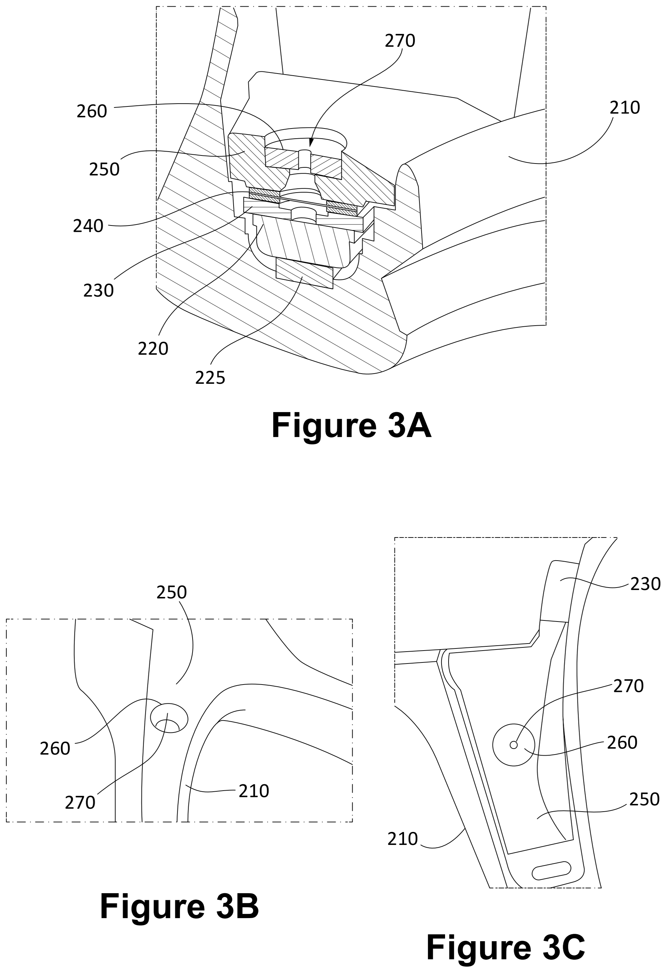

Figures 3A-3E illustrate an example method for encapsulating the one or more sensors 220 inside the head-wearable device 100, in accordance with some embodiments. The method begins with molding the base portion 210 of the frame of the head-wearable device 100. The method further includes coupling the one or more sensors 220 to the base portion 210 via the sensor mount 225 (e.g., as illustrated in Figure 3A). In some embodiments, the method further includes coupling the circuit 230 to the base portion 210 (e.g., as illustrated in Figure 3A), the one or more sensors 220 (e.g., as illustrated in Figure 3A), and/or the sensor mount 225 and electrically coupling the circuit to the one or more sensors 220. In some embodiments, the method further includes coupling the sensor mesh 240 to the base portion 210, the circuit 230 (e.g., as illustrated in Figure 3A), the one or more sensors 220, and/or the sensor mount 225. The method further includes coupling the shield 250 to the base portion 210 (e.g., as illustrated in Figure 3A), the sensor mesh 240 (e.g., as illustrated in Figure 3A), the circuit 230, the one or more sensors 220, and/or the sensor mount 225. The method further includes coupling the shim 260 to the shield (e.g., as illustrated in Figure 3A). In some embodiments, the shim opening of the shim 260, the shield opening of the shield 250, and the circuit opening of the circuit 230 are aligned such that these openings form the through-hole 270.

Figure 3A illustrates a cross-section view of the encapsulation before the second shot of the polymer material is applied, in accordance with some embodiments. Figures 3B-3C illustrate a top-down view of the encapsulation before the second shot of the polymer material is applied, in accordance with some embodiments. As the shield 250 is configured to encapsulate the interior cavity formed between the base portion 210 and the shield 250, only the base portion 210, the shield 250, the shim 260, and the through-hole 270 are visible via the top-down view (e.g., as illustrated in Figures 3B-3C). In some embodiments, a portion of the circuit 230 is not encapsulated by the base portion 210 and the shield 250, as illustrated in Figure 3C. In some embodiments, the portion of the circuit 230 is configured to electrically couple to the one or more other electronic components of the head-wearable device 100 before and/or after the second shot of the polymer material is applied.

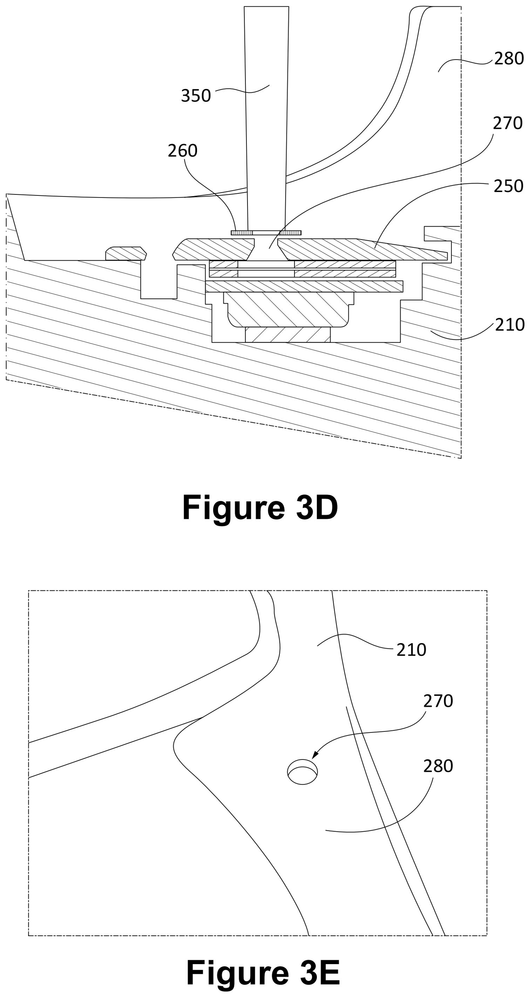

The example method for encapsulating the one or more sensors 220 inside the head-wearable device 100 further includes removably coupling a pin 350 to the shim 260 (e.g., the pin 350 is pressed against the shim 260, as illustrated in Figure 3D). In some embodiments, the shim compresses when the pin 350 is removably coupled to the shim 260. While removably coupled to the shim 260, the pin 350 is aligned with the through-hole 270, as formed by the shim opening of the shim 260, the shield opening of the shield 250, and/or the circuit opening of the circuit 230. While the pin 350 is removably coupled to the shim 260, the second shot of the polymer material is molded over the base portion 210 and the shield 250 to form the cover portion 280. The method further includes, after the cover portion 280 has dried and/or cooled, decoupling the pin 350 from the shim 260 (e.g., removing the pin 350 from the shim 260). When the pin 350 is decoupled from the shim 260, the through-hole 270 is further formed through the cover portion 280, extending from the shim 260 and the shield 250 to the exterior side of the cover portion 280.

Figure 3E illustrates a top-down view of the encapsulation after the second shot of the polymer material is applied and the pin 350 is decoupled from the shim 260, in accordance with some embodiments. Once the cover portion 280 is overmolded onto the base portion 210, only the through-hole 270 and the cover portion 280 (and/or, in some embodiments, the base portion 210) are visible via the top-down view (e.g., as illustrated in Figure 3E), and the shield 250 is entirely covered by the cover portion 280 (e.g., as illustrated in Figure 3E). The shield 250 is configured such none of the polymer material applied during the second shot enters the interior cavity formed between the base portion 210 and the shield 250, and the one or more sensors 220, the sensor mount 250, the circuit 230, and/or the sensor mesh 240 are not damaged by heat from the second shot of the polymer material. The shield 250, the shim 260, and the pin 350 are configured such that none of the polymer material applied during the second shot enters the interior cavity formed between the base portion 210 and the shield 250 via the through-hole 270. In some embodiments, a diameter of the pin 350 is less than a diameter of the shim 260 (e.g., as illustrated in Figure 3D) (e.g., the pin 350 does not contact the shield 250 during the second shot), and, thus, a portion of the shim 260 is covered by the cover portion 180.

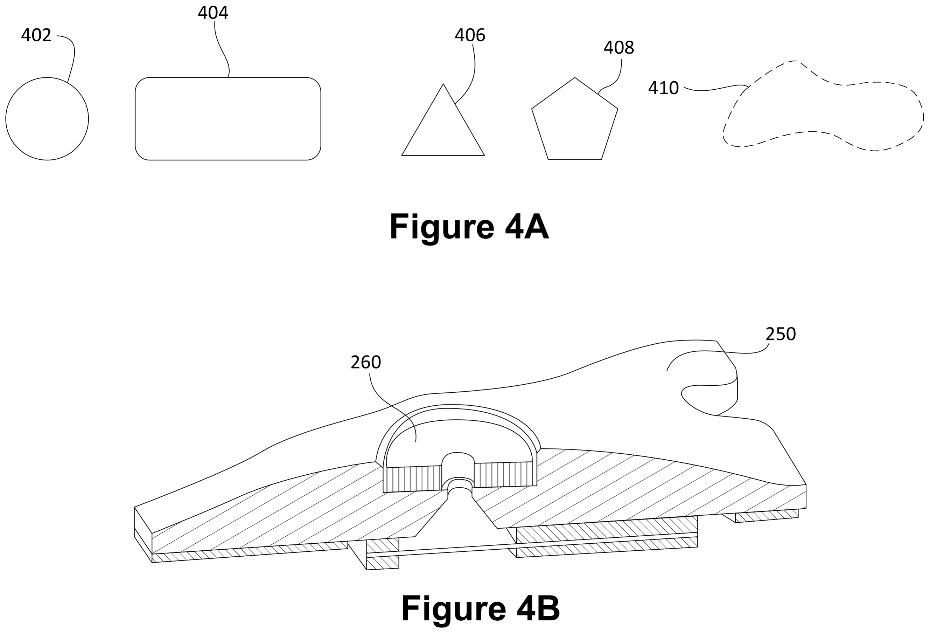

Figure 4A illustrates a plurality of shapes of the through-hole 270, in accordance with some embodiments. The through-hole 270 may be any shape including, but not limited to, a circular shape 402 (e.g., as illustrated in Figures 1A-3E), a rectangular shape 404, a triangular shape 406, a pentagonal shape 408, and/or an arbitrary two-dimensional shape 410. Figure 4B illustrates a shape of the shield 250, in accordance with some embodiments. The shield 250 has a curved and/or domed shape to maintain sturdiness of the shield 250 (e.g., minimize warping of the shield 250) during the second shot of the polymer material. The curved and/or domed shape of the shield 250 further allows the polymer material to easily flow over the surface of the shield 250 during the second shot to evenly encapsulate the shield 250 in the cover portion 180. In some embodiments, the shield 250 includes an indentation that is configured to contain the shim 260, as illustrated in Figure 4B.

In some embodiments, the through hole 270 is between 0.05 millimeters and 3.0 millimeters in diameter (e.g., 0.5 millimeters, 1.0 millimeter, 1.5 millimeters, 2.0 millimeters, 2.5 millimeters, 3.0 millimeters, etc.). In some embodiments, the through-hole 270 has a varying diameter between 0.1 millimeters and 3.0 millimeters. For example, a portion of the through-hole 270 formed through the cover portion 280 may have a diameter of 2.0 millimeters, a portion of the through-hole 270 formed through the shim opening of the shim 260 is 0.5 millimeters, a portion of the through-hole 270 formed through the shield opening of the shield 250 is 0.5 millimeters at a first end of the shield opening and expands to 1.5 millimeters at a second end of the shield opening (e.g., as illustrated in Figure 3A), and a portion of the through-hole 270 formed through the circuit opening of the circuit 230 is 1.0 millimeter. The portion of the through-hole 270 formed through the cover portion 280 is equal to a diameter of the pin 350.

In some embodiments, the shield has a thickness between 0.25 millimeters and 2.0 millimeters (e.g., 0.25 millimeters, 0.5 millimeters, 0.6 millimeters, 1.0 millimeter, 1.1 millimeters, 1.2 millimeters, 1.5 millimeters, 2.0 millimeters, etc.). In some embodiments, the one or more sensors 220 has a thickness between 0.1 millimeters and 2.0 millimeters (e.g., 0.1 millimeters, 0.25 millimeters, 0.5 millimeters, 0.95 millimeters, 1.0 millimeter, 1.5 millimeters, 2.0 millimeters, etc.). In some embodiments, the sensor mesh 240 has a thickness between 0.05 millimeters and 1.0 millimeter (e.g., 0.05 millimeters, 0.1 millimeters, 0.25 millimeters, 0.5 millimeters, 1.0 millimeter, etc.).

In some embodiments, the polymer material comprising the base portion 210 and/or the cover portion 280 includes acrylonitrile butadiene styrene (ABS), high-density polyethylene (HDPE), polyether ether ketone (PEEK), polyamide (nylon), polycarbonate (PC), polyethylene (PE), polyetherimide (PEI), polybutylene terephthalate (PBTR), acrylic (PMMA), polyoxymethylene (POM), polypropylene (PP), silicone, thermoplastic elastomer (TPE), thermoplastic polyurethane (TPU), thermoplastic rubber (TRP), and/or any other plastic, elastomer, or rubber material. In some embodiments, the base portion 210 is a first polymer material and the cover portion 280 is a second polymer material that is different from the first polymer material. In some embodiments, the shield 250 is a material with a greater heat tolerance than a molding temperature of the polymer material, such as a metal (e.g., stainless steel) and/or another polymer material. In some embodiments, the shim 260 is a silicone material and/or another compressible or elastomeric material. In some embodiments, the component parts (e.g., the one or more sensors 220, the sensor mount 225, the circuit 230, the sensor mesh 240, the shield 250, and/or the shim 260) of the encapsulation design are coupled to one another and/or the base portion 210 via one or more screws, one or more dowels, one or more pins, and/or or one or more adhesives (e.g., a pressure-sensitive adhesive (PSA)).

(A1) Figures 1A-4B illustrate a wearable device (e.g., the head-wearable device 100), in accordance with some embodiments. The wearable device includes a first material (e.g., the frame of the head-wearable device 100 including the base portion 210 and the cover portion 280). The wearable device further includes a shield material (e.g., the shield 250), the shield material having a heat tolerance greater than a heat tolerance of the first material (e.g., the shield 250 is a material with a greater heat tolerance than the molding temperature of the polymer material). The wearable device further includes one or more sensors (e.g., the one or more sensors 220) positioned beneath the shield material and embedded within an overmolded portion (e.g., the cover portion 280) of the first material (e.g., as illustrated in Figures 2A-2B). The wearable device further includes a through-hole (e.g., the through-hole 270), extending from an exterior portion of the first material to an interior portion (e.g., the interior cavity of the head-wearable device 100 between the base portion 210 and the cover portion 280) of the first material where the one or more sensors are embedded, wherein the one or more sensors detect data via the through-hole (e.g., as illustrated in Figures 2A-2B).

(A2) In some embodiments of A1, while the wearable device is worn by a user, the through-hole points toward a portion of a face of the user (e.g., as described in reference to Figures 1A-1B).

(A3) In some embodiments of any of A1-A2, (i) the one or more sensors is one or more microphones, (ii) the wearable device further comprises one or more second microphones (e.g., the nose-pad microphone), and (iii), while the wearable device is worn by a user, the one or more microphones and the one or more second microphones are in a line with a mouth of the user (e.g., as described in reference to Figures 1A-1B).

(A4) In some embodiments of any of A1-A3, the wearable device further comprises a mesh (e.g., the sensor mesh 240) positioned between the one or more sensors and the exterior portion of the first material (e.g., as illustrated in Figures 2A-2B).

(A5) In some embodiments of any of A1-A4, the wearable device further comprises a shim (e.g., the shim 260) positioned between the shield material and the overmolded portion of the material (e.g., as illustrated in Figures 2A-2B).

(A6) In some embodiments of any of A1-A5, the shim is a silicone material.

(A7) In some embodiments of any of A1-A6, the through-hole extends through the shim (e.g., as illustrated in Figures 2A-2B).

(A8) In some embodiments of any of A1-A7, the shield material is a stainless steel material.

(A9) In some embodiments of any of A1-A8, the through-hole extends through the shield material (e.g., as illustrated in Figures 2A-2B).

(A10) In some embodiments of any of A1-A9, the wearable device further comprises a flexible circuit (e.g., the circuit 230) positioned beneath the shield material and coupled to the one or more sensors (e.g., as illustrated in Figures 2A-2B).

(A11) In some embodiments of any of A1-A10, the first material comprises a first-shot portion (e.g., the base portion 210) and the overmolded portion, and the one or more sensors and the shield material are coupled to the first-shot portion (e.g., as illustrated in Figures 2A-2B).

(A12) In some embodiments of any of A1-A11, the first material is a plastic polymer material.

(A13) In some embodiments of any of A1-A12, the wearable device further comprises: (i) a second shield material (e.g., the shield 250), the second shield material having a second heat tolerance greater than the heat tolerance of the first material, (ii) one or more second sensors (e.g., the second microphone, as described in reference to Figures 1A-1B and/or the one or more sensors 220) positioned beneath the second shield material and embedded within the overmolded portion of the first material, and (iii) a second through-hole (e.g., the through-hole 270 at the second sensor opening 112), extending from the exterior portion of the first material to a second interior portion of the first material where the one or more second sensors are embedded, wherein the one or more second sensors detect second data via the second through-hole.

(A14) In some embodiments of any of A1-A13, the one or more sensors includes at least one of one or more microphones (e.g., as described in reference to Figures 1A-1B), one or more light sensors, one or more temperature sensors, and one or more pressure sensors.

(A15) In some embodiments of any of A1-A14, the wearable device is a pair of smart glasses.

(A16) In some embodiments of any of A1-A15, the through-hole has a diameter between 1.0 millimeter and 1.5 millimeters.

(A17) In some embodiments of any of A1-A16, the shield material has a thickness between 0.5 millimeters and 2.0 millimeters.

(A18) In some embodiments of any of A1-A17, the through-hole has a circular shape (e.g., as described in reference to Figure 4A).

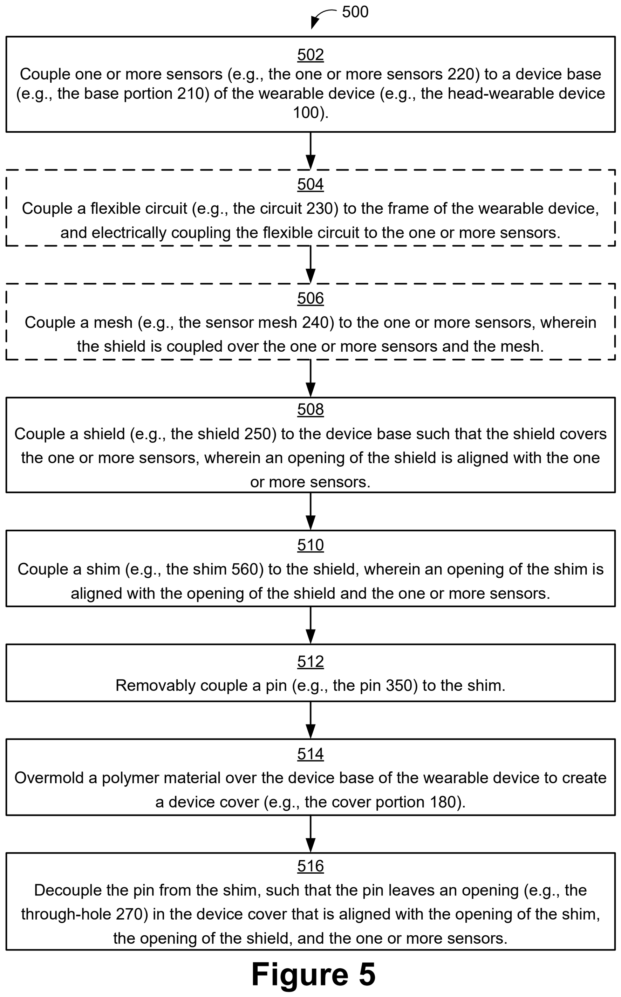

Figure 5 illustrates a flow diagram of a method for manufacturing a wearable device, in accordance with some embodiments. Operations (e.g., steps) of the method 500 can be performed by one or more processors (e.g., central processing unit and/or MCU) of a system. At least some of the operations shown in Figure 5 correspond to instructions stored in a computer memory or computer-readable storage medium (e.g., storage, RAM, and/or memory). Operations of the method 500 can be performed by a single device alone or in conjunction with one or more processors and/or hardware components of another communicatively coupled device and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(B1) Figure 5 shows a flow chart of a method 500 for manufacturing a wearable device (e.g., the head-wearable device 100), in accordance with some embodiments.

In some embodiments, the method 500 includes, coupling one or more sensors (e.g., the one or more sensors 220) to a device base (e.g., the base portion 210) of the wearable device (502). The method 500 further includes coupling a shield (e.g., the shield 250) to the device base such that the shield covers the one or more sensors (e.g., as illustrated in Figures 2A-3D), wherein an opening of the shield (e.g., the shield opening) is aligned with the one or more sensors (e.g., as illustrated in Figures 2A-3D) (508). The method 500 further includes coupling a shim (e.g., the shim 560) to the shield, wherein an opening of the shim (e.g., the shim opening) is aligned with the opening of the shield and the one or more sensors (e.g., as illustrated in Figures 2A-3D) (510). The method 500 further includes removably coupling a pin (e.g., the pin 350) to the shim (e.g., as illustrated in Figure 3D) (512). The method 500 further includes overmolding a polymer material (e.g., the polymer material described in reference to Figures 1A-4B) over the device base of the wearable device to create a device cover (e.g., the cover portion 180) (514). The method 500 further includes decoupling the pin from the shim, such that the pin leaves an opening (e.g., the through-hole 270) in the device cover that is aligned with the opening of the shim, the opening of the shield, and the one or more sensors (516).

(B2) In some embodiments of B2, after coupling the one or more sensors to the device base of the wearable device, coupling a mesh (e.g., the sensor mesh 240) to the one or more sensors, wherein the shield is coupled over the one or more sensors and the mesh (e.g., as illustrated in Figures 2A-3D) (506).

(B3) In some embodiments of any of B1-B2, the pin is decoupled from the shim after the polymer material is dried.

(B4) In some embodiments of any of B1-B3, the method further comprising coupling a flexible circuit (e.g., the circuit 230) to the device base of the wearable device, and electrically coupling the flexible circuit to the one or more sensors (e.g., as illustrated in Figures 2A-3D) (504).

(B5) In some embodiments of any of B1-B4, the opening in the device cover is configured such that, while the wearable device is worn by a user, the opening in the device cover points toward a portion of a face of the user (e.g., as described in reference to Figures 1A-1B).

(B6) In some embodiments of any of B1-B5, the shim is a silicone material.

(B7) In some embodiments of any of B1-B6, the shield is a stainless steel material.

(B8) In some embodiments of any of B1-B7, the device cover and the device base of the wearable device are a plastic polymer material.

(B9) In some embodiments of any of B1-B8, the one or more sensors includes at least one of one or more microphones (e.g., as described in reference to Figures 1A-1B), one or more light sensors, one or more temperature sensors, and one or more pressure sensors.

(B10) In some embodiments of any of B1-B9, the method 500 further includes, before overmolding the polymer material over the device base of the wearable device: (i) coupling one or more second sensors (e.g., the second microphone, as described in reference to Figures 1A-1B and/or the one or more sensors 220) to the device base of the wearable device, (ii) coupling a second shield (e.g., the shield 250) over the one or more second sensors, wherein a second opening of the second shield is aligned with the one or more second sensors, (iii) coupling a second shim (e.g., the shim 260) to the second shield, wherein a second opening of the second shim is aligned with the second opening of the second shield and the one or more second sensors, and (iv) removably coupling a second pin (e.g., the pin 350) to the second shim. The method 500 further includes, after overmolding the polymer material over the device base of the wearable device, decoupling the second pin from the second shim, such that the second pin leaves a second opening (e.g., the through-hole 270 at the second sensor opening 112) in the device cover that is aligned with the second opening of the second shim, the second opening of the second shield, and the one or more second sensors.

(B11) In some embodiments of any of B1-B10, the wearable device is a pair of smart glasses.

(B12) In some embodiments of any of B1-B11, the opening in the device cover has a diameter between 1.0 millimeter and 1.5 millimeters.

(B13) In some embodiments of any of B1-B12, the shield has a thickness between 0.5 millimeters and 2.0 millimeters.

(B14) In some embodiments of any of B1-B13, the opening in the device cover has a circular shape.

(C1) In accordance with some embodiments, a pair of smart glasses (e.g., the head-wearable device 100) comprises a first material (e.g., the frame of the head-wearable device 100 including the base portion 210 and the cover portion 280). The pair of smart glasses further comprises a shield material (e.g., the shield 250), the shield material having a heat tolerance greater than a heat tolerance of the first material (e.g., the shield 250 is a material with a greater heat tolerance than the molding temperature of the polymer material). The we pair of smart glasses further comprises one or more sensors (e.g., the one or more sensors 220) positioned beneath the shield material and embedded within an overmolded portion (e.g., the cover portion 280) of the first material (e.g., as illustrated in Figures 2A-2B). The pair of smart glasses further comprises a through-hole (e.g., the through-hole 270), extending from an exterior portion of the first material to an interior portion (e.g., the interior cavity of the head-wearable device 100 between the base portion 210 and the cover portion 280) of the first material where the one or more sensors are embedded, wherein the one or more sensors detect data via the through-hole (e.g., as illustrated in Figures 2A-2B).

(C2) In some embodiments of C1, the pair of smart glasses further includes features of any of A2-A18.

(D1) In accordance with some embodiments, a non-transitory, computer-readable storage medium including executable instructions that, when executed by one or more processors, cause the one or more processors to perform and/or cause performance of operations. The operations include causing one or more sensors (e.g., the one or more sensors 220) to be coupled to a device base (e.g., the base portion 210) of a wearable device (e.g., the head-wearable device 100). The operations further include causing a shield (e.g., the shield 250) to be coupled to the device base such that the shield covers the one or more sensors (e.g., as illustrated in Figures 2A-3D), wherein an opening of the shield (e.g., the shield opening) is aligned with the one or more sensors (e.g., as illustrated in Figures 2A-3D). The operations further include causing a shim (e.g., the shim 560) to be coupled to the shield, wherein an opening of the shim (e.g., the shim opening) is aligned with the opening of the shield and the one or more sensors (e.g., as illustrated in Figures 2A-3D) (510). The operations further include causing a pin (e.g., the pin 350) to be removably coupled to the shim (e.g., as illustrated in Figure 3D). The operations further include causing a polymer material (e.g., the polymer material described in reference to Figures 1A-4B) to be overmolded over the device base of the wearable device to create a device cover (e.g., the cover portion 180). The operations further include causing the pin to be decoupled from the shim, such that the pin leaves an opening (e.g., the through-hole 270) in the device cover that is aligned with the opening of the shim, the opening of the shield, and the one or more sensors.

(D2) In some embodiments of D1, the executable instructions further cause the one or more processors to perform and/or cause performance of operations corresponding to any of B2-B14.

(E1) In accordance with some embodiments, a system includes the wearable device of any of A1-A18, wherein the system is configured to capture data (e.g., as described in reference to Figures 1A-1B) at the one or more sensors.

(F1) In accordance with some embodiments, a packaging is configured to contain the wearable device of any of A1-A18.

(G1) In accordance with some embodiments, a system is configured to perform and/or cause performance of the method of manufacturing the wearable device of any of B1-B14.

The devices described above are further detailed below, including wrist-wearable devices, headset devices, systems, and haptic feedback devices. Specific operations described above may occur as a result of specific hardware, such hardware is described in further detail below. The devices described below are not limiting and features on these devices can be removed or additional features can be added to these devices.

### Example Extended-Reality Systems

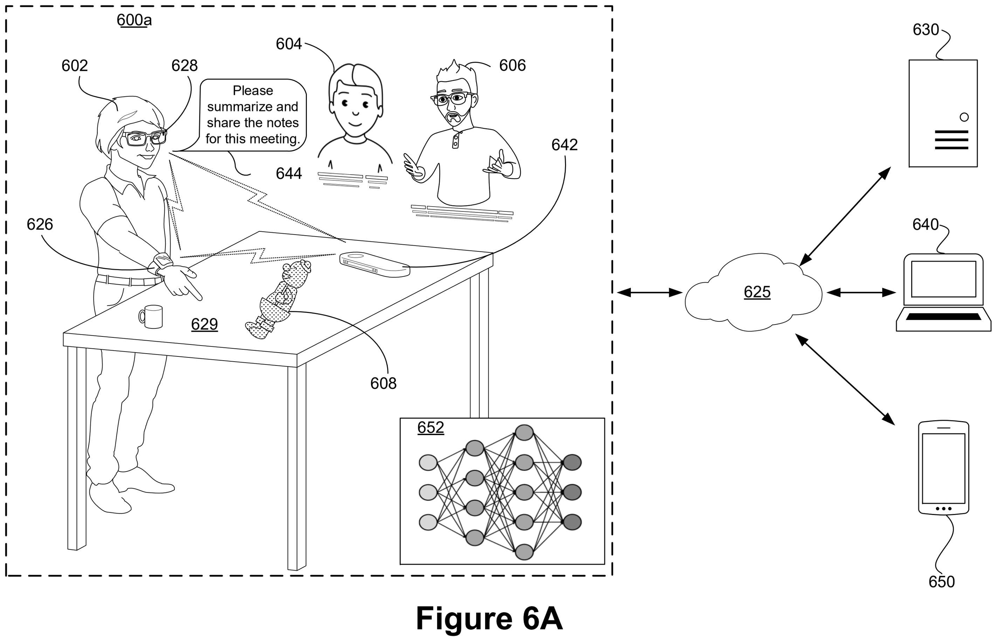

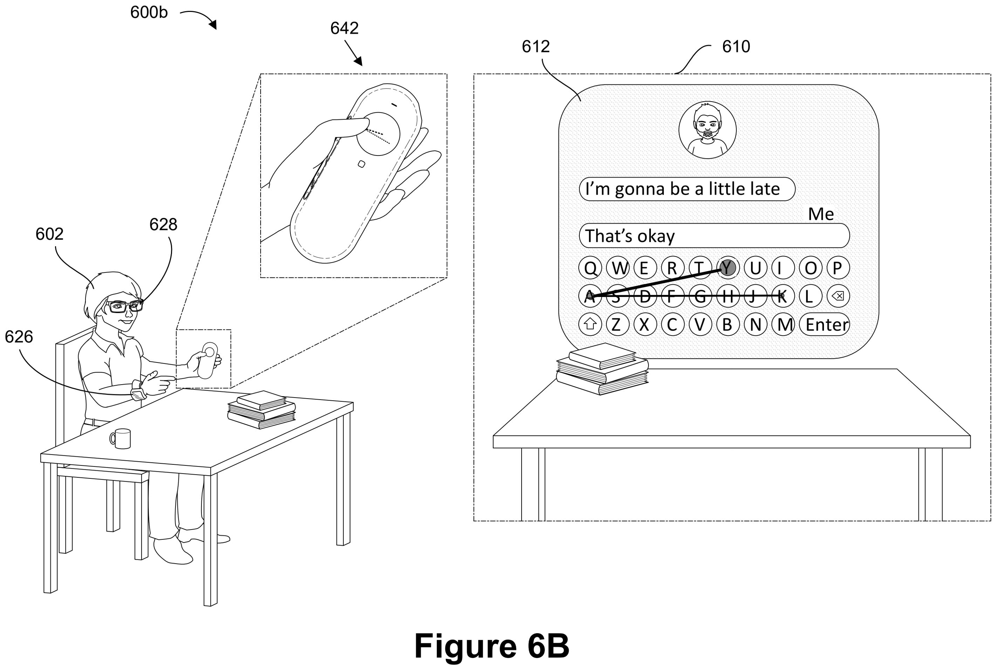

Figures 6A 6B, 6C-1, and 6C-2, illustrate example XR systems that include AR and MR systems, in accordance with some embodiments. Figure 6A shows a first XR system 600a and first example user interactions using a wrist-wearable device 626, a head-wearable device (e.g., AR device 628), and/or a HIPD 642. Figure 6B shows a second XR system 600b and second example user interactions using a wrist-wearable device 626, AR device 628, and/or an HIPD 642. Figures 6C-1 and 6C-2 show a third MR system 600c and third example user interactions using a wrist-wearable device 626, a head-wearable device (e.g., an MR device such as a VR device), and/or an HIPD 642. As the skilled artisan will appreciate upon reading the descriptions provided herein, the above-example AR and MR systems (described in detail below) can perform various functions and/or operations.

The wrist-wearable device 626, the head-wearable devices, and/or the HIPD 642 can communicatively couple via a network 625 (e.g., cellular, near field, Wi-Fi, personal area network, wireless LAN). Additionally, the wrist-wearable device 626, the head-wearable device, and/or the HIPD 642 can also communicatively couple with one or more servers 630, computers 640 (e.g., laptops, computers), mobile devices 650 (e.g., smartphones, tablets), and/or other electronic devices via the network 625 (e.g., cellular, near field, Wi-Fi, personal area network, wireless LAN). Similarly, a smart textile-based garment, when used, can also communicatively couple with the wrist-wearable device 626, the head-wearable device(s), the HIPD 642, the one or more servers 630, the computers 640, the mobile devices 650, and/or other electronic devices via the network 625 to provide inputs.

Turning to Figure 6A, a user 602 is shown wearing the wrist-wearable device 626 and the AR device 628 and having the HIPD 642 on their desk. The wrist-wearable device 626, the AR device 628, and the HIPD 642 facilitate user interaction with an AR environment. In particular, as shown by the first AR system 600a, the wrist-wearable device 626, the AR device 628, and/or the HIPD 642 cause presentation of one or more avatars 604, digital representations of contacts 606, and virtual objects 608. As discussed below, the user 602 can interact with the one or more avatars 604, digital representations of the contacts 606, and virtual objects 608 via the wrist-wearable device 626, the AR device 628, and/or the HIPD 642. In addition, the user 602 is also able to directly view physical objects in the environment, such as a physical table 629, through transparent lens(es) and waveguide(s) of the AR device 628. Alternatively, an MR device could be used in place of the AR device 628 and a similar user experience can take place, but the user would not be directly viewing physical objects in the environment, such as table 629, and would instead be presented with a virtual reconstruction of the table 629 produced from one or more sensors of the MR device (e.g., an outward facing camera capable of recording the surrounding environment).

The user 602 can use any of the wrist-wearable device 626, the AR device 628 (e.g., through physical inputs at the AR device and/or built-in motion tracking of a user's extremities), a smart-textile garment, externally mounted extremity tracking device, the HIPD 642 to provide user inputs, etc. For example, the user 602 can perform one or more hand gestures that are detected by the wrist-wearable device 626 (e.g., using one or more EMG sensors and/or IMUs built into the wrist-wearable device) and/or AR device 628 (e.g., using one or more image sensors or cameras) to provide a user input. Alternatively, or additionally, the user 602 can provide a user input via one or more touch surfaces of the wrist-wearable device 626, the AR device 628, and/or the HIPD 642, and/or voice commands captured by a microphone of the wrist-wearable device 626, the AR device 628, and/or the HIPD 642. The wrist-wearable device 626, the AR device 628, and/or the HIPD 642 include an artificially intelligent digital assistant to help the user in providing a user input (e.g., completing a sequence of operations, suggesting different operations or commands, providing reminders, confirming a command). For example, the digital assistant can be invoked through an input occurring at the AR device 628 (e.g., via an input at a temple arm of the AR device 628). In some embodiments, the user 602 can provide a user input via one or more facial gestures and/or facial expressions. For example, cameras of the wrist-wearable device 626, the AR device 628, and/or the HIPD 642 can track the user 602's eyes for navigating a user interface.

The wrist-wearable device 626, the AR device 628, and/or the HIPD 642 can operate alone or in conjunction to allow the user 602 to interact with the AR environment. In some embodiments, the HIPD 642 is configured to operate as a central hub or control center for the wrist-wearable device 626, the AR device 628, and/or another communicatively coupled device. For example, the user 602 can provide an input to interact with the AR environment at any of the wrist-wearable device 626, the AR device 628, and/or the HIPD 642, and the HIPD 642 can identify one or more back-end and front-end tasks to cause the performance of the requested interaction and distribute instructions to cause the performance of the one or more back-end and front-end tasks at the wrist-wearable device 626, the AR device 628, and/or the HIPD 642. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 642 can perform the back-end tasks and provide the wrist-wearable device 626 and/or the AR device 628 operational data corresponding to the performed back-end tasks such that the wrist-wearable device 626 and/or the AR device 628 can perform the front-end tasks. In this way, the HIPD 642, which has more computational resources and greater thermal headroom than the wrist-wearable device 626 and/or the AR device 628, performs computationally intensive tasks and reduces the computer resource utilization and/or power usage of the wrist-wearable device 626 and/or the AR device 628.

In the example shown by the first AR system 600a, the HIPD 642 identifies one or more back-end tasks and front-end tasks associated with a user request to initiate an AR video call with one or more other users (represented by the avatar 604 and the digital representation of the contact 606) and distributes instructions to cause the performance of the one or more back-end tasks and front-end tasks. In particular, the HIPD 642 performs back-end tasks for processing and/or rendering image data (and other data) associated with the AR video call and provides operational data associated with the performed back-end tasks to the AR device 628 such that the AR device 628 performs front-end tasks for presenting the AR video call (e.g., presenting the avatar 604 and the digital representation of the contact 606).

In some embodiments, the HIPD 642 can operate as a focal or anchor point for causing the presentation of information. This allows the user 602 to be generally aware of where information is presented. For example, as shown in the first AR system 600a, the avatar 604 and the digital representation of the contact 606 are presented above the HIPD 642. In particular, the HIPD 642 and the AR device 628 operate in conjunction to determine a location for presenting the avatar 604 and the digital representation of the contact 606. In some embodiments, information can be presented within a predetermined distance from the HIPD 642 (e.g., within five meters). For example, as shown in the first AR system 600a, virtual object 608 is presented on the desk some distance from the HIPD 642. Similar to the above example, the HIPD 642 and the AR device 628 can operate in conjunction to determine a location for presenting the virtual object 608. Alternatively, in some embodiments, presentation of information is not bound by the HIPD 642. More specifically, the avatar 604, the digital representation of the contact 606, and the virtual object 608 do not have to be presented within a predetermined distance of the HIPD 642. While an AR device 628 is described working with an HIPD, an MR headset can be interacted with in the same way as the AR device 628.

User inputs provided at the wrist-wearable device 626, the AR device 628, and/or the HIPD 642 are coordinated such that the user can use any device to initiate, continue, and/or complete an operation. For example, the user 602 can provide a user input to the AR device 628 to cause the AR device 628 to present the virtual object 608 and, while the virtual object 608 is presented by the AR device 628, the user 602 can provide one or more hand gestures via the wrist-wearable device 626 to interact and/or manipulate the virtual object 608. While an AR device 628 is described working with a wrist-wearable device 626, an MR headset can be interacted with in the same way as the AR device 628.

### Integration of Artificial Intelligence with XR Systems

Figure 6A illustrates an interaction in which an artificially intelligent virtual assistant can assist in requests made by a user 602. The AI virtual assistant can be used to complete open-ended requests made through natural language inputs by a user 602. For example, in Figure 6A the user 602 makes an audible request 644 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 6A also illustrates an example neural network 652 used in Artificial Intelligence applications. Uses of Artificial Intelligence (AI) are varied and encompass many different aspects of the devices and systems described herein. AI capabilities cover a diverse range of applications and deepen interactions between the user 602 and user devices (e.g., the AR device 628, an MR device 632, the HIPD 642, the wrist-wearable device 626). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, *k*-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 602 can interact with an AI model through natural language inputs captured by a voice sensor, text inputs, or any other input modality that accepts natural language and/or a corresponding voice sensor module. In another instance, input is provided by tracking the eye gaze of a user 602 via a gaze tracker module. Additionally, the AI model can also receive inputs beyond those supplied by a user 602. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 628) or from multiple devices that are in communication with each other (e.g., a system that includes at least two of an AR device 628, an MR device 632, the HIPD 642, the wrist-wearable device 626, etc.). The AI model can also access additional information (e.g., one or more servers 630, the computers 640, the mobile devices 650, and/or other electronic devices) via a network 625.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 628, an MR device 632, the HIPD 642, the wrist-wearable device 626) via the one or more networks. The cloud-computing platforms provide scalable computing resources, distributed computing, managed AI services, interference acceleration, pre-trained models, APIs, and/or other resources to support comprehensive computations required by the Al-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 628, an MR device 632, the HIPD 642, the wrist-wearable device 626), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 642), haptic feedback can provide information to the user 602. An AI model can also use the inputs described above to determine the appropriate modality and device(s) to present content to the user (e.g., a user walking on a busy road can be presented with an audio output instead of a visual output to avoid distracting the user 602).

### Example Augmented Reality Interaction

Figure 6B shows the user 602 wearing the wrist-wearable device 626 and the AR device 628 and holding the HIPD 642. In the second AR system 600b, the wrist-wearable device 626, the AR device 628, and/or the HIPD 642 are used to receive and/or provide one or more messages to a contact of the user 602. In particular, the wrist-wearable device 626, the AR device 628, and/or the HIPD 642 detect and coordinate one or more user inputs to initiate a messaging application and prepare a response to a received message via the messaging application.

In some embodiments, the user 602 initiates, via a user input, an application on the wrist-wearable device 626, the AR device 628, and/or the HIPD 642 that causes the application to initiate on at least one device. For example, in the second AR system 600b the user 602 performs a hand gesture associated with a command for initiating a messaging application (represented by messaging user interface 612); the wrist-wearable device 626 detects the hand gesture; and, based on a determination that the user 602 is wearing the AR device 628, causes the AR device 628 to present a messaging user interface 612 of the messaging application. The AR device 628 can present the messaging user interface 612 to the user 602 via its display (e.g., as shown by user 602's field of view 610). In some embodiments, the application is initiated and can be run on the device (e.g., the wrist-wearable device 626, the AR device 628, and/or the HIPD 642) that detects the user input to initiate the application, and the device provides another device operational data to cause the presentation of the messaging application. For example, the wrist-wearable device 626 can detect the user input to initiate a messaging application, initiate and run the messaging application, and provide operational data to the AR device 628 and/or the HIPD 642 to cause presentation of the messaging application. Alternatively, the application can be initiated and run at a device other than the device that detected the user input. For example, the wrist-wearable device 626 can detect the hand gesture associated with initiating the messaging application and cause the HIPD 642 to run the messaging application and coordinate the presentation of the messaging application.

Further, the user 602 can provide a user input provided at the wrist-wearable device 626, the AR device 628, and/or the HIPD 642 to continue and/or complete an operation initiated at another device. For example, after initiating the messaging application via the wrist-wearable device 626 and while the AR device 628 presents the messaging user interface 612, the user 602 can provide an input at the HIPD 642 to prepare a response (e.g., shown by the swipe gesture performed on the HIPD 642). The user 602's gestures performed on the HIPD 642 can be provided and/or displayed on another device. For example, the user 602's swipe gestures performed on the HIPD 642 are displayed on a virtual keyboard of the messaging user interface 612 displayed by the AR device 628.

In some embodiments, the wrist-wearable device 626, the AR device 628, the HIPD 642, and/or other communicatively coupled devices can present one or more notifications to the user 602. The notification can be an indication of a new message, an incoming call, an application update, a status update, etc. The user 602 can select the notification via the wrist-wearable device 626, the AR device 628, or the HIPD 642 and cause presentation of an application or operation associated with the notification on at least one device. For example, the user 602 can receive a notification that a message was received at the wrist-wearable device 626, the AR device 628, the HIPD 642, and/or other communicatively coupled device and provide a user input at the wrist-wearable device 626, the AR device 628, and/or the HIPD 642 to review the notification, and the device detecting the user input can cause an application associated with the notification to be initiated and/or presented at the wrist-wearable device 626, the AR device 628, and/or the HIPD 642.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 628 can present to the user 602 game application data and the HIPD 642 can use a controller to provide inputs to the game. Similarly, the user 602 can use the wrist-wearable device 626 to initiate a camera of the AR device 628, and the user can use the wrist-wearable device 626, the AR device 628, and/or the HIPD 642 to manipulate the image capture (e.g., zoom in or out, apply filters) and capture image data.

While an AR device 628 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 6C-1 and 6C-2, the user 602 is shown wearing the wrist-wearable device 626 and an MR device 632 (e.g., a device capable of providing either an entirely VR experience or an MR experience that displays object(s) from a physical environment at a display of the device) and holding the HIPD 642. In the third AR system 600c, the wrist-wearable device 626, the MR device 632, and/or the HIPD 642 are used to interact within an MR environment, such as a VR game or other MR/VR application. While the MR device 632 presents a representation of a VR game (e.g., first MR game environment 620) to the user 602, the wrist-wearable device 626, the MR device 632, and/or the HIPD 642 detect and coordinate one or more user inputs to allow the user 602 to interact with the VR game.

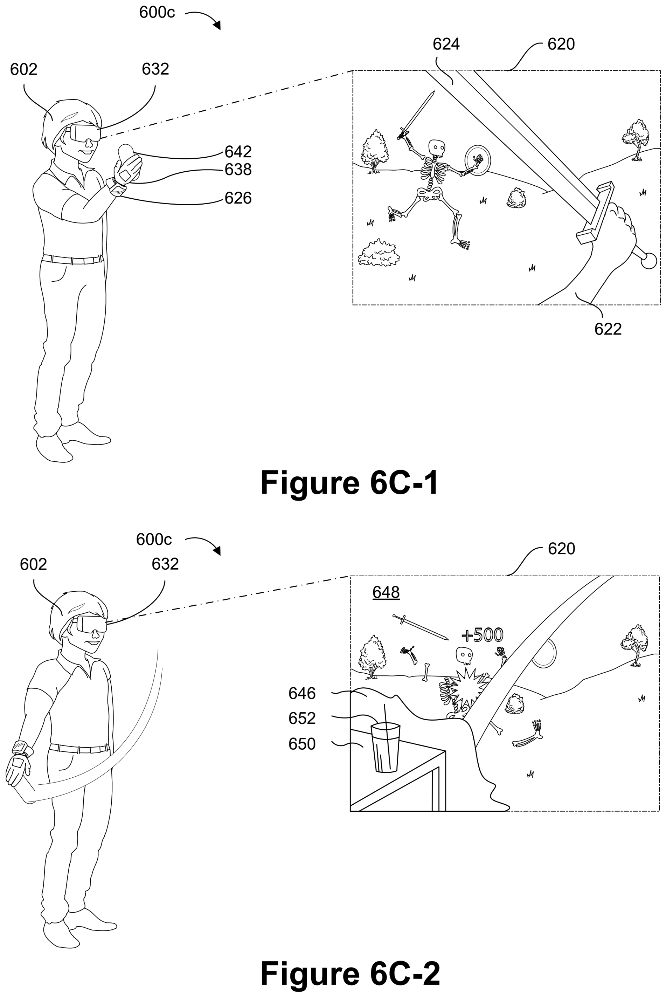

In some embodiments, the user 602 can provide a user input via the wrist-wearable device 626, the MR device 632, and/or the HIPD 642 that causes an action in a corresponding MR environment. For example, the user 602 in the third MR system 600c (shown in Figure 6C-1) raises the HIPD 642 to prepare for a swing in the first MR game environment 620. The MR device 632, responsive to the user 602 raising the HIPD 642, causes the MR representation of the user 622 to perform a similar action (e.g., raise a virtual object, such as a virtual sword 624). In some embodiments, each device uses respective sensor data and/or image data to detect the user input and provide an accurate representation of the user 602's motion. For example, image sensors (e.g., SLAM cameras or other cameras) of the HIPD 642 can be used to detect a position of the HIPD 642 relative to the user 602's body such that the virtual object can be positioned appropriately within the first MR game environment 620; sensor data from the wrist-wearable device 626 can be used to detect a velocity at which the user 602 raises the HIPD 642 such that the MR representation of the user 622 and the virtual sword 624 are synchronized with the user 602's movements; and image sensors of the MR device 632 can be used to represent the user 602's body, boundary conditions, or real-world objects within the first MR game environment 620.

In Figure6C-2, the user 602 performs a downward swing while holding the HIPD 642. The user 602's downward swing is detected by the wrist-wearable device 626, the MR device 632, and/or the HIPD 642 and a corresponding action is performed in the first MR game environment 620. In some embodiments, the data captured by each device is used to improve the user's experience within the MR environment. For example, sensor data of the wrist-wearable device 626 can be used to determine a speed and/or force at which the downward swing is performed and image sensors of the HIPD 642 and/or the MR device 632 can be used to determine a location of the swing and how it should be represented in the first MR game environment 620, which, in turn, can be used as inputs for the MR environment (e.g., game mechanics, which can use detected speed, force, locations, and/or aspects of the user 602's actions to classify a user's inputs (e.g., user performs a light strike, hard strike, critical strike, glancing strike, miss) or calculate an output (e.g., amount of damage)).

Figure 6C-2 further illustrates that a portion of the physical environment is reconstructed and displayed at a display of the MR device 632 while the MR game environment 620 is being displayed. In this instance, a reconstruction of the physical environment 646 is displayed in place of a portion of the MR game environment 620 when object(s) in the physical environment are potentially in the path of the user (e.g., a collision with the user and an object in the physical environment are likely). Thus, this example MR game environment 620 includes (i) an immersive VR portion 648 (e.g., an environment that does not have a corollary counterpart in a nearby physical environment) and (ii) a reconstruction of the physical environment 646 (e.g., table 650 and cup 652). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 626, the MR device 632, and/or the HIPD 642 are described as detecting user inputs, in some embodiments, user inputs are detected at a single device (with the single device being responsible for distributing signals to the other devices for performing the user input). For example, the HIPD 642 can operate an application for generating the first MR game environment 620 and provide the MR device 632 with corresponding data for causing the presentation of the first MR game environment 620, as well as detect the user 602's movements (while holding the HIPD 642) to cause the performance of corresponding actions within the first MR game environment 620. Additionally or alternatively, in some embodiments, operational data (e.g., sensor data, image data, application data, device data, and/or other data) of one or more devices is provided to a single device (e.g., the HIPD 642) to process the operational data and cause respective devices to perform an action associated with processed operational data.

In some embodiments, the user 602 can wear a wrist-wearable device 626, wear an MR device 632, wear smart textile-based garments 638 (e.g., wearable haptic gloves), and/or hold an HIPD 642 device. In this embodiment, the wrist-wearable device 626, the MR device 632, and/or the smart textile-based garments 638 are used to interact within an MR environment (e.g., any AR or MR system described above in reference to Figures 6A-6B). While the MR device 632 presents a representation of an MR game (e.g., second MR game environment 620) to the user 602, the wrist-wearable device 626, the MR device 632, and/or the smart textile-based garments 638 detect and coordinate one or more user inputs to allow the user 602 to interact with the MR environment.

In some embodiments, the user 602 can provide a user input via the wrist-wearable device 626, an HIPD 642, the MR device 632, and/or the smart textile-based garments 638 that causes an action in a corresponding MR environment. In some embodiments, each device uses respective sensor data and/or image data to detect the user input and provide an accurate representation of the user 602's motion. While four different input devices are shown (e.g., a wrist-wearable device 626, an MR device 632, an HIPD 642, and a smart textile-based garment 638) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 638) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 638 can be used in conjunction with an MR device and/or an HIPD 642.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 6A-6C-2 provided above are intended to augment the description provided in reference to Figures 1A-5. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings within the scope of the appended claims. The embodiments were chosen and described in order to best explain principles of operation and practical applications, to thereby enable others skilled in the art.

## Claims

1. A wearable device comprising:
a first material;
a shield material, the shield material having a heat tolerance greater than a heat tolerance of the first material;
one or more sensors positioned beneath the shield material and embedded within an overmolded portion of the first material; and
a through-hole, extending from an exterior portion of the first material to an interior portion of the first material where the one or more sensors are embedded, wherein the one or more sensors detect data via the through-hole.

2. The wearable device of claim 1, wherein:
the one or more sensors are one or more microphones;
the wearable device further comprises:
one or more second microphones positioned beneath the shield material and embedded within the overmolded portion of the first material; and
another through-hole, extending from the exterior portion of the first material to another interior portion of the first material where the one or more second microphones are embedded, wherein the one or more second microphones detect data via the other through-hole; and while the wearable device is worn by a user, the one or more microphones and the one or more second microphones are in a line with a mouth of the user.

3. The wearable device of claim 1 or claim 2, wherein the first material comprises a first-shot portion and the overmolded portion, and the one or more sensors and the shield material are coupled to the first-shot portion.

4. The wearable device of any preceding claim, further comprising a mesh positioned between the one or more sensors and the exterior portion of the first material.

5. The wearable device of any preceding claim, further comprising a shim positioned between the shield material and the overmolded portion of the first material;
optionally, wherein the shim is a silicone material;
optionally, wherein the through-hole extends through the shim.

6. The wearable device of any preceding claim, wherein, while the wearable device is worn by a user, the through-hole points toward a portion of a face of the user.

7. The wearable device any preceding claim and one or more of the following:
(i) wherein the shield material is a stainless steel material;
(ii) wherein the through-hole extends through the shield material
(iii) the first material is a plastic polymer material.

8. The wearable device of any preceding claim, further comprising a flexible circuit positioned beneath the shield material and coupled to the one or more sensors.

9. The wearable device of any preceding claim, further comprising:
a second shield material, the second shield material having a second heat tolerance greater than the heat tolerance of the first material;
one or more second sensors positioned beneath the second shield material and embedded within the overmolded portion of the first material; and
a second through-hole, extending from the exterior portion of the first material to a second interior portion of the first material where the one or more second sensors are embedded, wherein the one or more second sensors detect second data via the second through-hole.

10. The wearable device of any preceding claim, wherein the one or more sensors comprises at least one of one or more microphones, one or more light sensors, one or more temperature sensors, and one or more pressure sensors.

11. The wearable device of any preceding claim and one or more of the following:
(i) wherein the wearable device is a pair of smart glasses;
(ii) wherein the through-hole has a diameter between 1.0 millimeter and 1.5 millimeters.

12. Smart glasses comprising:
a first material;
a shield material, the shield material having a heat tolerance greater than a heat tolerance of the first material;
one or more sensors positioned beneath the shield material and embedded within an overmolded portion of the first material; and
a through-hole, extending from an exterior portion of the first material to an interior portion of the first material where the one or more sensors are embedded, wherein the one or more sensors detect data via the through-hole.

13. The smart glasses of claim 12, wherein:
the one or more sensors are one or more microphones;
the smart glasses further comprises:
one or more second microphones positioned beneath the shield material and embedded within the overmolded portion of the first material; and
another through-hole, extending from the exterior portion of the first material to another interior portion of the first material where the one or more second microphones are embedded, wherein the one or more second microphones detect data via the other through-hole; and while the smart glasses are worn by a user, the one or more microphones and the one or more second microphones are in a line with a mouth of the user.

14. A system comprising:
one or more sensors;
a circuit, electrically coupled to the one or more sensors; and
a wearable device comprising:
a first material;
a shield material, the shield material having a heat tolerance greater than a heat tolerance of the first material, wherein the one or more sensors are positioned beneath the shield material and embedded within an overmolded portion of the first material; and
a through-hole, extending from an exterior portion of the first material to an interior portion of the first material where the one or more sensors are embedded, wherein the one or more sensors detect data via the through-hole.

15. The system of claim 14, wherein:
the one or more sensors are one or more microphones;
the system further comprises one or more second microphones, wherein the one or more second microphones are positioned beneath the shield material and embedded within the overmolded portion of the first material;
the wearable device further comprises another through-hole, extending from the exterior portion of the first material to another interior portion of the first material where the one or more second microphones are embedded, wherein the one or more second microphones detect data via the other through-hole; and
while the wearable device is worn by a user, the one or more microphones and the one or more second microphones are in a line with a mouth of the user.
